# EUROPEAN PATENT APPLICATION

(11) **EP 1 811 316 A1**
(43) Date of publication of application: **25.07.2007**
(21) Application number: 06021700.7
(22) Date of filing: 17.10.2006
(51) Int. Cl.: G01S 5/00, H04L 29/06

(54) **Wireless broadband internet system and its method of terminal hand-off**

(30) Priority: 11.01.2006 KR 20060003280
(71) Applicant: SAMSUNG ELECTRONICS CO., LTD., Suwon-si Gyeonggi-do 442-742 (KR)
(72) Inventor: Jeon, Seong-Joon, Yongin-si Gyeonggi-do (KR); Park, Jahng-Sun, -dong Yeongtong-gu Suwon-si Gyeonggi-do (KR)
(74) Representative: Lang, Johannes

(57) **Abstract**

A terminal hand-off apparatus in a wireless broadband Internet system and a terminal hand-off method in the system includes a connection processor and a hand-off processor. The connection processor predicts a movement direction using a current position of the terminal in communication with a counterpart terminal using a predetermined Internet Protocol(IP) address, and requests an IP address to be assigned upon entering a coverage area of at least one of a plurality of Radio Access Stations (RASs) located near the predicted movement direction. The hand-off processor transmits at least one IP address assigned from the RAS whose coverage area has been entered to the counterpart terminal, and requests the counterpart terminal to transmit data to the IP address assigned by the RAS upon hand-off to one of the plurality of RASs assigning the at least one IP address.

## Description

### BACKGROUND OF THE INVENTION

### Field of the Invention

The present invention relates to a wireless broadband Internet system and its method of terminal hand-off.

### Description of the Related Art

A wireless broadband Internet system allows a terminal such as a notebook computer, a personal digital assistant, and a smart phone to receive wireless broadband Internet service anytime and anywhere, while the terminal is stopping or moving (60km/hour or more).

In the wireless broadband Internet system, when a terminal is out of a coverage area of a current radio access station in order to communicate with a counterpart terminal, the terminal hands off to a new radio access station in order to perform seamless communication with the counterpart terminal (e.g., a smart phone, a notebook computer, a desktop computer, a server, and the like).

In a hand-off process of a terminal in a wireless broadband Internet system, the terminal (a Mobile Subscriber Station hereinafter referred to as an MSS) communicates with a counterpart terminal through a Radio Access Station1 (RAS 1) while moving from a coverage area of the RAS 1 to a coverage area of a RAS2.

In other words, the MSS communicates with the counterpart terminal through the RAS 1 while moving from the RAS 1 to the RAS2.

The MSS communicates with the counterpart terminal using an Internet Protocol (IP) address, for example, "1.1.1.1" assigned by the RAS1.

When an intensity of a signal received from the RAS 1 is less than a set intensity, the MSS then requests hand-off to the RAS2 in order to perform seamless communication with the counterpart terminal, and provides information to the RAS1 regarding hand-off execution to the RAS2.

The RAS1 provides information to an Access Control Router1 (ACR1) regarding the execution of the hand-off of the MSS to the RAS2.

After receiving the hand-off execution information, the ACR1 queues data received from the counterpart terminal, which will be transmitted to the MSS.

Upon receipt of hand-off request from the MSS, the RAS2 assigns and transmits a new Internet Protocol (IP) address to the MSS, and transmits the new IP address of the MSS to the counterpart terminal through an ACR2. By doing so, the hand-off of the MSS to the RAS2 is completed.

The new IP address assigned to the MSS is assumed to be "2.2.2.1."

In other words, after completion of the hand-off, the MSS communicates with the counterpart terminal through the ACR2 using the IP address of "2.2.2.1."

The RAS2 transmits hand-off completion information of the MSS to the ACR1 through the ACR2.

Upon receipt of the hand-off completion information of the MSS, the ACR1 transmits data to the ACR2 via a Wibro gateway that has been received from the counterpart terminal until the hand-off of the MSS to the RAS2 has been completed and data that has been received at the address of "1.1.1.1" before the MSS hands-off. Such a data transmission process is called IP tunneling.

The ACR2 transmits data to the MSS via the RAS2 received from the counterpart terminal through the ACR1 before the hand-off and data received at the address of "1.1.1.1" before the hand-off of the MSS through the IP tunneling,

As described above, the MSS and the counterpart terminal establish one session with one connection to communicate with each other.

Accordingly, while the MSS receives several kinds of data, such as a text, an image, and real time data (voice and video), from the counterpart terminal, when a bottleneck is caused by text data or other non-real time data, the MSS cannot normally receive the real time data.

In other words, if the MSS establishes the session with the counterpart terminal, all data is transmitted through one session stream irrespective of a Quality of Services (QoS) of data. Accordingly, the real time data is lost due to the bottleneck of the non-real time data.

Furthermore, after the MSS hands-off from the RAS1 to the RAS2, the MSS receives data, which is received from the counterpart terminal from hand-off initiation to hand-off completion, via the IP tunneling of the ACR1.

If real time data stored in the ACR1 before completion of the hand-off of the MSS is received after completion of the hand-off of the MSS, the data may be useless.

Furthermore, the ACR1 requires hardware for transmitting data to the ACR2 received from the counterpart terminal and data received at the address of "1.1.1.1" before the hand-off, and also requires software for operating the hardware.

When an intensity of a signal received from the RAS is less than a predetermined intensity, the MSS scans an accessible RAS for the hand-off and is assigned a new IP address from the RAS to be handed-off.

However, the MSS cannot perform normal communication with the counterpart terminal before scanning a new RAS for hand-off and before being assigned the new IP address from the RAS.

### SUMMARY OF THE INVENTION

It is an object of the present invention to provide a wireless broadband Internet system and terminal hand-off method in the system in which a movement direction is predicted, and Internet Protocol (IP) addresses are assigned from Radio Access Stations (RASs) located near the predicted movement direction, and an optimal hand-off time is calculated and hand-off is performed.

A first aspect of the present invention provides a terminal hand-off apparatus in a wireless broadband Internet system, the apparatus including: a connection processor adapted to predict a movement direction of the terminal that is in communication with a counterpart terminal using a current position of the terminal that is in communication with a counterpart terminal using a predetermined Internet Protocol (IP) address, and to request an IP address to be assigned upon entering a coverage area of at least one of a plurality of Radio Access Stations (RASs) located near the predicted movement direction; and a hand-off processor adapted to transmit at least one IP address assigned by the RAS whose coverage area is entered to the counterpart terminal, and to request the counterpart terminal to transmit data to the IP address assigned by the RAS upon hand-off to one of the plurality of RASs assigning the at least one IP address.

The connection processor is preferably adapted to either detect the current position of the terminal from position information provided from at least three RASs located near the terminal, using a triangulation method, or to detect the current position of the terminal using signals received from at least three satellites. The connection processor is preferably adapted to predict the movement direction of the terminal using the current position of the terminal and previous positions of the terminal for a set time. The connection processor is preferably assigned at least one IP address from the RAS whose coverage area has been entered, using multi-homing of a mobile Stream Control Transport Protocol (mSCTP), and maintains connection with the plurality of RASs.

The hand-off processor is preferably adapted to request the counterpart terminal to delete the predetermined IP address as the terminal hands-off to one of the plurality of RASs assigning the at least one IP address.

A second aspect of the present invention provides a terminal hand-off method in a wireless broadband Internet system, the method including: predicting a movement direction using a current position of the terminal that is in communication with a counterpart terminal using any IP address; upon entering a coverage area of at least one of a plurality of Radio Access Stations (RASs) located near the predicted movement direction, requesting an IP address to be assigned, and transmitting at least one IP address assigned from the RAS whose coverage area has been entered to the counterpart terminal; and when handing-off to one of the plurality of RASs assigning at least one IP address, requesting the counterpart terminal to transmit data to the IP address assigned by the RAS.

Predicting the movement direction using the current position of the terminal preferably includes either detecting the current position of the terminal from position information provided from at least three RASs located near the terminal using a triangulation method, or detecting the current position of the terminal using signals received from at least three satellites. Predicting the movement direction using the current position of the terminal preferably includes predicting the movement direction of the terminal using the current position of the terminal and previous positions of the terminal for a set time.

Transmitting at least one IP address assigned by the RAS whose coverage area has been entered to the counterpart terminal preferably includes assigning at least one IP address from the RAS whose coverage area has been entered, using a multi-homing of a mobile Stream Control Transport Protocol (mSCTP), and maintaining connection with the RAS.

Requesting the counterpart terminal to transmit data to the IP address assigned by the RAS preferably includes requesting the counterpart terminal to delete the predetermined IP address upon hand-off of the terminal to one of the RASs assigning at least one IP address.

### BRIEF DESCRIPTION OF THE DRAWINGS

A more complete appreciation of the present invention and many of the attendant advantages thereof, will be readily apparent as the present invention becomes better understood by reference to the following detailed description when considered in conjunction with the accompanying drawings in which like reference symbols indicate the same or similar components, wherein:
FIG. 1 is a view of a hand-off process of a terminal in a wireless broadband Internet system;
FIG. 2 is a view of an example of a hand-off process of a terminal in a wireless broadband Internet system according to an exemplary embodiment of the present invention;
FIG. 3 is a view of an example of a process of detecting a position of a Mobile Subscriber Station (MSS) for hand-off according to an exemplary embodiment of the present invention;
FIG. 4 is a view of another example of a process of detecting a position of an MSS for hand-off according to an exemplary embodiment of the present invention;
FIG. 5 is a block diagram of a terminal according to an exemplary embodiment of the present invention;
FIG. 6 is a ladder diagram of a terminal hand-off according to an exemplary embodiment of the present invention;
FIG. 7 is a block diagram of a terminal according to another exemplary embodiment of the present invention; and
FIG. 8 is a ladder diagram of a terminal hand-off according to another exemplary embodiment of the present invention.

### DETAILED DESCRIPTION OF THE INVENTION

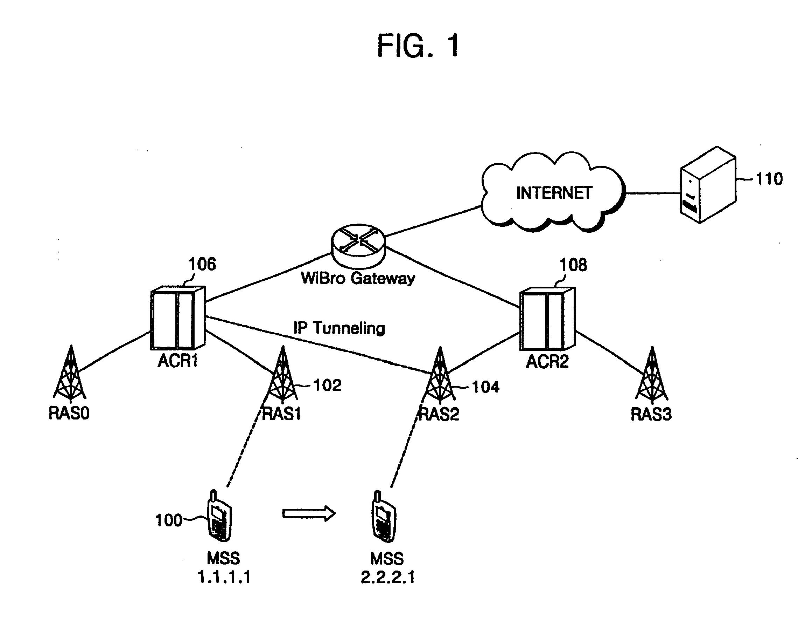

A hand-off process of a terminal in a wireless broadband Internet system is described below with reference to FIG. 1.

As shown in FIG. 1, the terminal (a Mobile Subscriber Station hereinafter referred to as an MSS) 100 communicates with a counterpart terminal 110 through a Radio Access Station1 (RAS1) 102 while moving from a coverage area of the RAS1 102 to a coverage area of an RAS2 104.

In other words, the MSS 100 communicates with the counterpart terminal 110 through the RAS1 102 while moving from the RAS1 102 to the RAS2 104 in a direction indicated by an arrow.

The MSS 100 communicates with the counterpart terminal 110 using an Internet Protocol (IP) address, for example, "1.1.1.1" assigned by the RAS1 102.

When an intensity of a signal received from the RAS1 102 is less than a set intensity, the MSS 100 then requests hand-off to the RAS2 104 in order to perform seamless communication with the counterpart terminal 110, and provides information to the RAS 1 102 regarding hand-off execution to the RAS2 104,

The RAS 1 102 provides information to an Access Control Router1 (ACR1) 106 regarding the execution of the hand-off of the MSS 100 to the RAS2 104,

After receiving the hand-off execution information, the ACR1 106 queues data received from the counterpart terminal 110, which will be transmitted to the MSS 100.

Upon receipt of hand-off request from the MSS 100, the RAS2 104 assigns and transmits a new Internet Protocol (IP) address to the MSS 100, and transmits the new IP address of the MSS 100 to the counterpart terminal 110 through an ACR2 108. By doing so, the hand-off of the MSS 100 to the RAS2 104 is completed.

The new IP address assigned to the MSS 100 is assumed to be "2.2.2.1."

In other words, after completion of the hand-off, the MSS 100 communicates with the counterpart terminal 110 through the ACR2 108 using the IP address of "2.2.2.1."

The RAS2 104 transmits hand-off completion information of the MSS 100 to the ACR1 106 through the ACR2 108.

Upon receipt of the hand-off completion information of the MSS 100, the ACR1 106 transmits data to the ACR2 108 via a Wibro gateway that has been received from the counterpart terminal 110 until the hand-off of the MSS 100 to the RAS2 104 has been completed and data that has been received at the address of "1.1.1.1" before the MSS 100 hands-off. Such a data transmission process is called IP tunneling.

The ACR2 108 transmits data to the MSS 100 via the RAS2 104 received from the counterpart terminal 110 through the ACR1 106 before the hand-off and data received at the address of "1.1.1.1" before the hand-off of the MSS 100 through the IP tunneling,

As described above, the MSS 100 and the counterpart terminal 110 establish one session with one connection to communicate with each other.

Accordingly, while the MSS 100 receives several kinds of data, such as a text, an image, and real time data (voice and video), from the counterpart terminal 110, when a bottleneck is caused by text data or other non-real time data, the MSS 100 cannot normally receive the real time data.

In other words, if the MSS 100 establishes the session with the counterpart terminal 110, all data is transmitted through one session stream irrespective of a Quality of Services (QoS) of data. Accordingly, the real time data is lost due to the bottleneck of the non-real time data.

Furthermore, after the MSS 100 hands-off from the RAS1 102 to the RAS2 104, the MSS 100 receives data, which is received from the counterpart terminal 110 from hand-off initiation to hand-off completion, via the IP tunneling of the ACR1 106.

If real time data stored in the ACR1 106 before completion of the hand-off of the MSS 100 is received after completion of the hand-off of the MSS 100, the data may be useless.

Furthermore, the ACR1 106 requires hardware for transmitting data to the ACR2 108 received from the counterpart terminal 110 and data received at the address of "1.1.1.1" before the hand-off, and also requires software for operating the hardware.

When an intensity of a signal received from the RAS is less than a predetermined intensity, the MSS 100 scans an accessible RAS for the hand-off and is assigned a new IP address from the RAS to be handed-off.

However, the MSS 100 cannot perform normal communication with the counterpart terminal 110 before scanning a new RAS for hand-off and before being
Hereinafter, exemplary embodiments of the present invention are described in detail with reference to the accompanying drawings. In the following description, a detailed description of known functions and configurations incorporated herein has been omitted for conciseness.

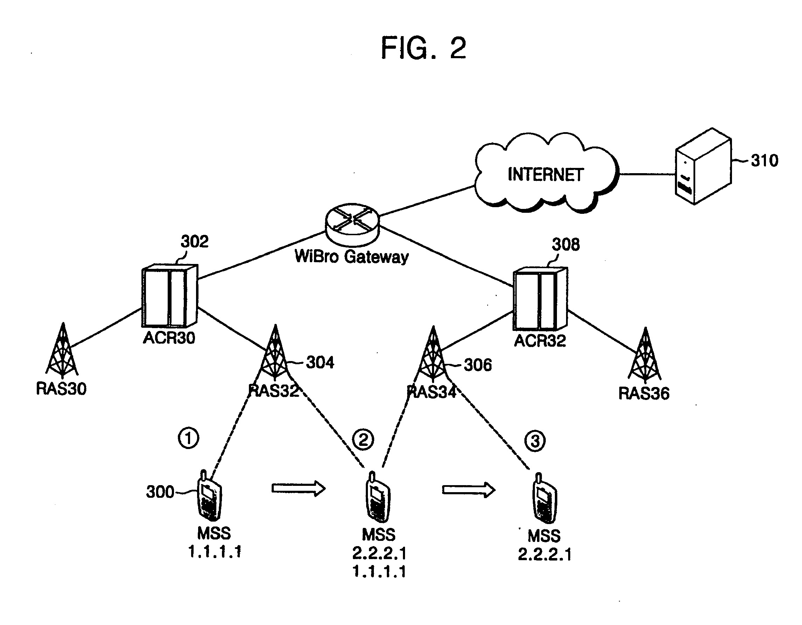

FIG. 2 is a view of an example of a hand-off process of a Mobile Subscriber Station (MSS) in a wireless broadband Internet system according to an embodiment of the present invention.

As shown in FIG. 2, a Mobile Subscriber Station (MSS) 300 detects its position and movement direction every set period while moving. The MSS 300 communicates with a counterpart terminal 310 through a Radio Access Station 32 (RAS32) 304 using an Internet Protocol (IP) address of "1.1.1.1."

As described in more detail below, the MSS 300 can detect its position every set period while moving, using a triangulation method or a Global Positioning System (GPS).

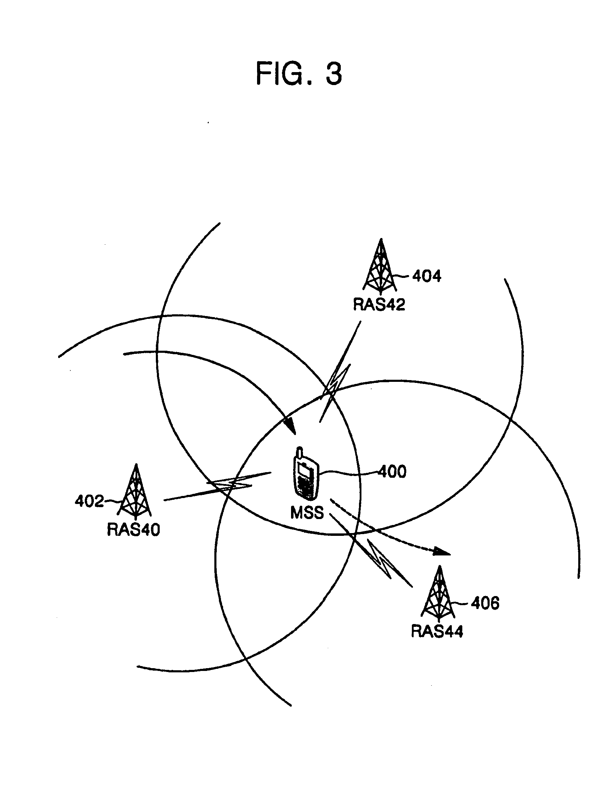

First, a process of detecting the position of the MSS using the triangulation method is described below with reference to FIG. 3.

As shown in FIG. 3, an MSS 400 detects its position using the triangulation method while moving in the direction of the arrow.

In other words, the MSS 400 detects its position from RAS position information provided from near Radio Access Stations (RASs) 402, 404, and 406, while moving.

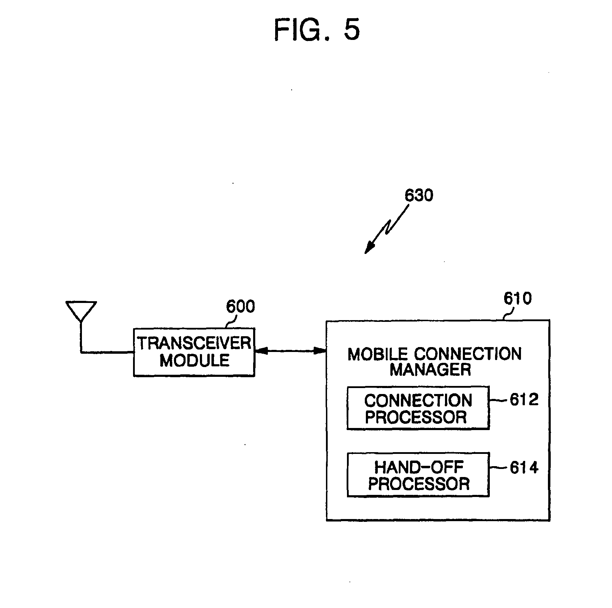

A detailed construction of the MSS 400 is described later with reference to FIG. 5:

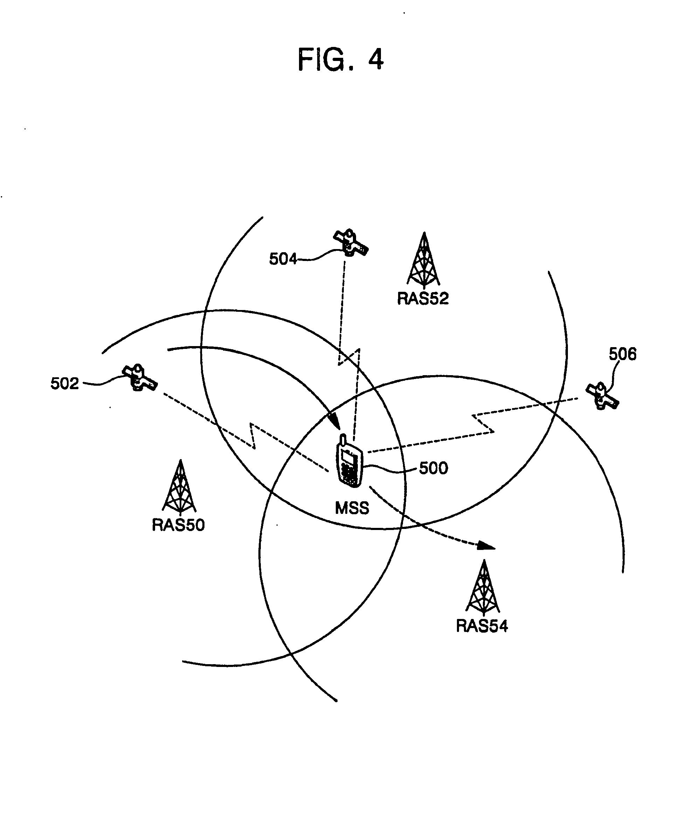

A process of detecting the position of the MSS using the GPS is described below with reference to FIG. 4. An MSS 500 calculates distances between itself and satellites 502, 504, and 506, and detects its position from the respective calculated distances.

Preferably, the MSS 500 includes the GPS to receive signals generated from the satellites 502, 504, and 506.

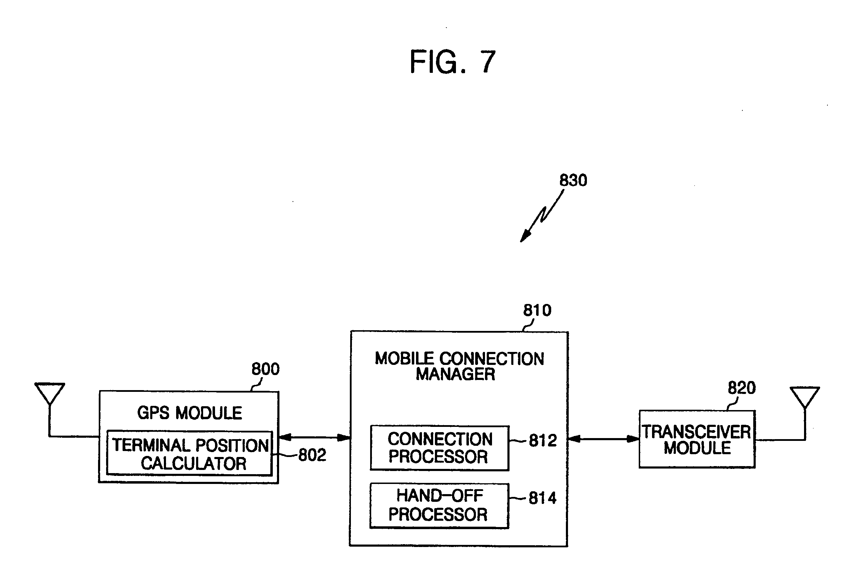

A detailed construction of the MSS 500 including the GPS is described later with reference to FIG. 7.

As described above, the MSS 300 detects its position using the triangulation method or the GPS, and calculates a movement speed using a movement distance for a set time and a movement time. The MSS 300 predicts the movement direction on the basis of its current position that is detected every set period and a previously detected position.

The MSS 300 detects its position, movement direction, and speed every set period, and receives the RAS position information from the RASs located near the MSS 300.

The MSS 300 predicts the RASs to be assigned new IP addresses, using the position information provided from the nearby RASs. The predicted RAS is assumed to be an RAS34 306.

The MSS 300 is assigned a new IP address of "2.2.2.1" from the predicted RAS34 306, and provides the assigned new IP address to an address addition message and transmits the IP address to a counterpart terminal 310 through the RAS32 304 and an Access Control Router 30 (ACR30) 302.

In other words, when the MSS 300 moves from a position ① that is within a service area of the RAS32 304 to a position ② in a region where the service area of the RAS32 304 and the service area of the RAS34 306 overlap, the MSS 300 is assigned the IP address of "2.2.2.1" from the RAS34 306 and provides the assigned IP address of "2.2.2.1" to the address addition message and transmits the IP address to the counterpart terminal 310 through the RAS32 304 and the ACR30 302.

Accordingly, the counterpart terminal 310 adds the new IP address of "2.2.2.1" to an address list that is used for communication with the MSS 300.

The counterpart terminal 310 keeps transmitting data to be transmitted to the MSS 300, to the IP address of "1.1.1.1."

The MSS 300 then determines hand-off time, using intensities of signals received from the nearby RASs, and its position, movement direction, and movement speed.

For hand-off, the MSS 300 generates an address change message for changing the IP address assigned from the RAS to be handed-off, into an address for communication, and requests a counterpart side to change the address.

In other words, when the MSS 300 is out of the coverage area of the RAS32 304, i.e., when the intensity of the signal received from the RAS32 304 is less than a predetermined intensity and the intensity of the signal received from the RAS34 306 is more than a predetermined intensity, the MSS 300 hands off to the RAS34 306.

The MSS 300 generates the address change message for changing the IP address assigned from the RAS34 306 to be handed-off, into the communication address, and transmits the generated address change message to the counterpart terminal 310 through the RAS32 304 and the ACR30 302.

Accordingly, the counterpart terminal 310 changes the address used for communication with the MSS 300 from "1.1.1.1" to the address of "2.2.2.1," and transmits data to be transmitted to the MSS 300, to the address of "2.2.2.1."

When the MSS 300 is completely out of the coverage area of the RAS before the hand-off, the MSS 300 generates an address deletion message for deleting the IP address assigned from the RAS before the hand-off and transmits the generated address deletion message to the counterpart terminal 310.

In other words, when the MSS 300 is out of the coverage area of the RAS32 304 before the hand-off and moves to a position ③ in a coverage area of the RAS34 306, the MSS 300 generates the address deletion message for deleting the IP address of "1.1.1.1" assigned from the RAS32 304, and transmits the generated address deletion message to the counterpart terminal 310 through the RAS32 304.

Accordingly, the counterpart terminal 310 deletes the address of "1.1.1.1" from the address list that is used for communication with the MSS 300.

The counterpart terminal 310 then transmits data to be transmitted to the MSS 300, to the address of "2.2.2.1" assigned from the RAS34 306.

As described above, the MSS 300 can add, delete, and change the IP address for communicating with the counterpart terminal 310 in the hand-off process based on multi-homing of a mobile Stream Control Transport Protocol (mSCTP).

The mSCTP refers to a protocol having a dynamic address configuration function added to a Stream Control Transport Protocol (SCTP) that is a protocol of a transport layer among Open System Interconnect (OSI) 7 layers.

The SCTP enables the multi-homing which can set at least one IP address when a transport layer session is established.

The multi-homing refers to a method of binding at least one IP address to one session, and transmitting data to one address or to several addresses at the same time.

In other words, the MSS can bind at least one IP address to one session using the mSCTP, and can dynamically add the IP address to be used to one session or delete any one of the IP addresses bound to one session, using the dynamic address configuration function.

The MSS 300 can perform the binding to one session to communicate with the counterpart terminal 310 and then, use multi-streaming of the mSCTP, thereby, upon receipt of data from the counterpart terminal, providing the best multimedia service using several streams, under control differentiated depending on the type of data.

In other words, the MSS 300 can transmit a plurality of streams in one session to the counterpart terminal on a QoS-by-QoS basis, thereby preventing a bottleneck of a low-priority stream from having influence on a high-priority stream.

For example, when data is transmitted and received through three streams between the MSS 300 and the counterpart terminal 310, i.e., when real time video, text, and image are transmitted and received through each stream, the bottleneck can be prevented when the real time video, text, and image are transmitted through one stream.

FIG. 5 is a block diagram of a terminal according to an exemplary embodiment of the present invention.

As shown in FIG. 5, the terminal according to an exemplary embodiment of the present invention includes a transceiver module 600, and a mobile connection manager 610.

The terminal 630 of FIG. 5 detects its position while moving or stopping, using position information received from nearby RASs.

In other words, the terminal 630 applies the received position information to the triangulation method and detects its position. The triangulation method refers to a measurement method for observing angles at respective points distant away from each other, and numerically determining each position relationship.

As described above, the MSS 400 of FIG. 3 has the same construction as the terminal 630 of FIG. 5.

The mobile connection manager 610 includes a connection processor 612 and a hand-off processor 614.

The connection processor 612 detects a position and a movement direction of the terminal 630 every set period. The connection processor 612 applies the position information received from the nearby RASs, to the triangulation method and detects the position of the terminal 630 every set period.

The connection processor 612 receives the position information through the transceiver module 600 from at least three RASs located near the moving terminal 630, applies the received position information to the triangulation method, and detects the position of the terminal 630.

The connection processor 612 detects the position of the terminal 630, and calculates the movement speed of the terminal 630 based on a movement distance for a set time and a movement time of the terminal 630. The connection processor 612 predicts the movement direction of the terminal 630 using the current position and the previous position of the terminal 630 that are detected every set period.

The connection processor 612 predicts the RASs to be assigned the new IP address, using the position information provided from the RASs whose movement directions are predicted.

If the connection processor 612 is assigned the new IP address from the predicted RASs, the connection processor 612 provides the assigned IP address to the hand-off processor 614, and controls the hand-off processor 614 to allow the terminal 630 to maintain connection with the RASs assigning the new IP address before the hand-off to the RASs.

The connection with the RASs that the terminal 630 maintains until handing-off to the RASs assigning the new IP address is called a virtual connection.

The hand-off processor 614 provides the new IP address, which is assigned using the multi-homing of the mSCTP, to the address addition message, and transmits the address addition message to the counterpart terminal of the terminal 630 through the transceiver module 600.

Accordingly, the counterpart terminal of the terminal 630 adds the IP address provided to the address addition message, to the address list that is used for communication with the terminal 630.

When there is data to be transmitted to the terminal 630, the counterpart terminal of the terminal 630 transmits the data to the IP address used for communication before the new IP address is added to the terminal 630.

The hand-off processor 614 then determines the hand-off time, using the intensities of the signals received from the RASs located near the moving terminal 630, the terminal 630 position, and the terminal 630 movement direction and speed, and performs the hand-off at a hand-off time.

The hand-off processor 614 transmits the address change message to the counterpart terminal of the terminal 630 to change the IP address assigned from the RAS to be handed-off, into the address for communication.

The address change message is transmitted to the counterpart terminal through the RAS to which the terminal 630 is to hand-off.

Accordingly, the counterpart terminal changes the address used for communication with the terminal 630, from the IP address assigned from the RAS before the hand-off to the IP address assigned from the RAS to be handed-off, and transmits the data to be transmitted to the terminal 630, to the changed IP address.

As the terminal 630 is completely out of the service area of the RAS before the hand-off, the hand-off processor 614 generates the address deletion message to delete the IP address assigned from the RAS before the hand-off using the multi-homing of the mSCTP, and transmits the address deletion message to the counterpart terminal through the RAS to be handed-off.

The counterpart terminal deletes the IP address assigned from the RAS before the hands-off of the terminal 630, from the address list that is used for communication with the terminal 630.

The counterpart terminal then transmits data to be transmitted to the terminal 630, to the IP address assigned from the hand-off RAS.

After the hand-off processor 614 establishes session with the counterpart terminal using the multi-streaming of the mSCTP, the hand-off processor 614 can receive at least one piece of data from the counterpart terminal through the different streams generated on the QoS-by-QoS basis, using the multi-streaming of the mSCTP.

Accordingly, the bottleneck of the low-priority stream can be prevented from having an influence on the high-priority stream.

For example, when data is transmitted and received through three streams between the terminal 630 and the counterpart terminal, i.e., when the real time video, text, and image are transmitted and received through each stream, the bottleneck can be prevented when the real time video, text, and image are transmitted through one stream.

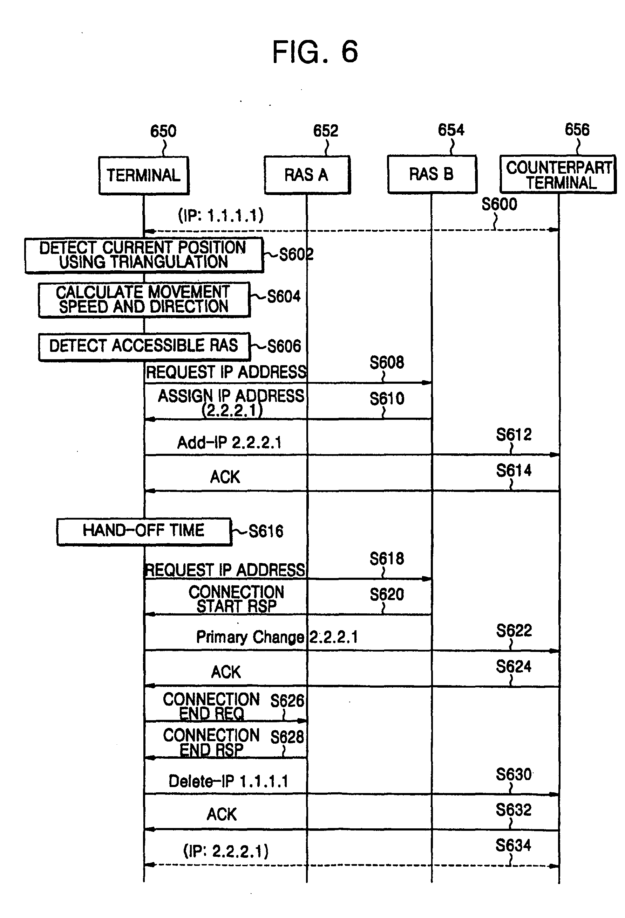

FIG. 6 is a ladder diagram of a terminal hand-off according to an exemplary embodiment of the present invention.

In FIG. 6, a terminal 650 performing hand-off has the same construction as the terminal 630 of FIG. 5.

In other words, the hand-off of the terminal 650 of FIG. 6 is the same as that of the terminal 630 of FIG. 5.

As shown in FIG. 6, the terminal 650 is in communication with a counterpart terminal 656 through an RAS A 652 (S600). The terminal 650 is assigned an IP address of "1.1.1.1" from the RAS A 652.

The terminal 650 can move in an arbitrary direction or stop at a certain position while communicating with the counterpart terminal 656 through the RAS A 652. The terminal 650 detects its position every set period, using position information received from nearby RASs, in order to detect its position while moving or stopping (S602).

In other words, the terminal 650 applies the position information received from nearby RASs to a triangulation method in order to detect its position and stores the detected position information. Preferably, at least three pieces of position information of the nearby RASs are used to detect the position of the terminal 650.

The terminal 650 then calculates a movement speed based on a movement distance for a set time and a movement time, and predicts its movement direction using its position detected every set period and previous position (S604).

The terminal 650 previously detects the RASs that can be assigned new IP addresses, using the position information provided from the RASs whose movement directions are predicted (S606).

The detecting of the RAS that can be assigned the new IP address can be performed depending on whether or not the terminal 650 enters coverage areas of the RASs that can be assigned the new IP addresses.

The terminal 650 is assumed to enter a coverage area of an RAS B 654.

The terminal 650 requests the RAS B 654 to assign the IP address (S608).

Upon receipt of the IP address assignment request from the terminal 650, the RAS B 654 assigns the IP address of "2.2.2.1," and transmits the assigned IP address to the terminal 650 (S610).

Upon assignment of the new IP address of "2.2.2.1" from the RAS B 654, the terminal 650 provides the new assigned IP address of "2.2.2.1" to the address addition (Add-IP) message using the multi-homing of the mSCTP, and transmits the address addition message to the counterpart terminal 656 (S612).

The counterpart terminal 656 adds the IP address of "2.2.2.1" provided to the address addition message received from the terminal 650, to the address list used for communication with the terminal 650, and generates and transmits an address addition response message to the terminal 650 (S614).

When there is data to be transmitted to the terminal 650, the counterpart terminal 656 transmits the data to the IP address of "1.1.1.1" used for communication before the new IP address is added to the terminal 650.

When an intensity of a signal received from the RAS A 652 is less than a predetermined intensity, the terminal 650 then checks whether or not an intensity of a signal received from the RAS B 654 is more than a predetermined intensity (S616).

The terminal 650 generates and transmits a connection start request (REQ) message to the RAS B 654 when the intensity of the signal received from the RAS B 654 is more than a predetermined intensity and the intensity of the signal received from the RAS A 652 is less than a predetermined intensity (S618).

Upon receipt of the connection start request message from the terminal 650, the RAS B 654 generates and transmits a connection start response (RSP) message to the terminal 650 (S620).

The terminal 650 then generates an address change (Primary change) message to change the IP address of "2.2.2.1" assigned from the RAS B 654 into an address for communication, and transmits the generated change message to the counterpart terminal 656 (S622).

Preferably, the address change message is transmitted from the terminal 650 to the counterpart terminal 656 through the RAS B 654.

Accordingly, the counterpart terminal 656 changes the address used for communication with the terminal 650, from the IP address of "1.1.1.1" assigned from the RAS A 652 before hand-off to the IP address of "2.2.2.1" assigned from the RAS B 656 to be hand-off, and generates and transmits an address change response message to the terminal 650 (S624).

Upon receipt of the address change response message from the counterpart terminal 656, the terminal 650 generates and transmits the connection end request (REQ) message to the RAS A 652 before hand-off (S626).

Upon receipt of the connection end request message from the terminal 650, the RAS A 652 ends connection with the terminal 650, and generates and transmits a connection end response (RSP) message to the terminal 650 (S628).

Upon receipt of the connection end response message from the RAS A 652, the terminal 650 generates an address deletion (Delete-IP) message to delete the IP address of "1.1.1.1" assigned from the RAS A 652 using the multi-homing of the mSCTP, and transmits the address deletion message to the counterpart terminal 656 through the RAS B 654 (S630).

Upon receipt of the address deletion message from the terminal 650, the counterpart terminal 656 deletes the IP address of "1.1.1.1" assigned from the RAS A 652, from the address list used for communication with the terminal 650, and generates and transmits an address deletion response message to the terminal 650 (S632).

The terminal 650 then performs communication with the counterpart terminal 650 through the IP address of "2.2.2.1" assigned from the RAS B 654 (S634).

FIG. 7 is a block diagram of a terminal according to another exemplary embodiment of the present invention.

As shown in FIG. 7, the terminal 830 according to another exemplary embodiment of the present invention includes a GPS module 800, a mobile connection manager 810, and a transceiver module 820. The terminal 500 of FIG. 4 has the same construction as the terminal 830 of FIG. 7.

The GPS module 800 includes a terminal position calculator 802. A signal received from at least one satellite is provided to the terminal position calculator 802 so that a position of the terminal 803 is calculated.

The terminal position calculator 802 calculates distances between the terminal 830 and the satellites transmitting the signal, and calculates a position of the terminal 830 from the respective calculated distances and provides the calculated position to the mobile connection manager 810.

The mobile connection manager 810 includes a connection processor 812 and a hand-off processor 814.

The connection processor 812 detects a movement distance for a set time and a movement time of the terminal 830 every set period, using position information of the terminal 830 provided from the terminal position calculator 802 within the GPS module 800.

The connection processor 812 calculates the movement speed of the terminal 830 using the movement distance for the set time and the movement time of the terminal 830. The connection processor 812 predicts the movement direction of the terminal 830 using a position detected every set period and a previous position of the terminal 830.

The connection processor 812 previously detects RASs to be assigned new IP addresses, using the position information provided from the RASs located near the predicted movement direction.

Upon assignment of the new IP address from the previously detected RASs, the connection processor 812 provides the assigned address to the hand-off processor 814, and controls the hand-off processor 814 to maintain a virtual connection with the RASs assigned the new IP address until the terminal 830 hands off to the RASs.

The hand-off processor 814 provides the new assigned IP address to an address addition message using multi-homing of mSCTP, and transmits the address addition message to the counterpart terminal of the terminal 830 through the transceiver module 820.

Accordingly, the counterpart terminal of the terminal 830 adds the IP address provided to the address addition message, to an address list used for communication with the terminal 830.

When there is data to be transmitted to the terminal 830, the counterpart terminal of the terminal 830 transmits the data to the IP address used for communication before the new IP address is added to the terminal 830.

The connection processor 812 then determines the hand-off time, using the intensities of the signals received from the RASs located near the moving terminal 830, the terminal 830 position, and the terminal 830 movement direction and speed, and controls the hand-off processor 814 to perform the hand-off at a hand-off time.

The hand-off processor 814 transmits the address change message to the counterpart terminal of the terminal 830 to change the IP address assigned from the RAS to be handed-off, into the address for communication.

The address change message is transmitted to the counterpart terminal through the RAS to which the terminal 830 is to hand-off.

Accordingly, the counterpart terminal changes the address used for communication with the terminal 830 from the IP address assigned from the RAS before the hand-off to the IP address assigned from the RAS to be handed-off, and transmits the data to be transmitted to the terminal 830 to the changed IP address.

Since the hand-off processor 814 is completely out of the service area of the RAS before the hand-off, the hand-off processor 814 generates the address deletion message to delete the IP address assigned from the RAS before the hand-off using the multi-homing of the mSCTP, and transmits the address deletion message to the counterpart terminal through the RAS to be handed-off.

The counterpart terminal deletes the IP address assigned from the RAS before the terminal 830 hands-off to, from the address list used for communication with the terminal 830.

The counterpart terminal then transmits data to be transmitted, to the IP address assigned from the hand-off RAS.

After a session is established with the counterpart terminal using the multi-streaming of the mSCTP, the hand-off processor 814 can receive at least one piece of data from the counterpart terminal through the different streams generated on the QoS-by-QoS basis, using the multi-streaming of the mSCTP.

Accordingly, the bottleneck of the low-priority stream can be prevented from having an influence on the high-priority stream.

For example, when data is transmitted and received through three streams in one session between the terminal 830 and the counterpart terminal, i.e., when the real time video, text, and image are transmitted and received through each stream, the bottleneck can be prevented when the real time video, text, and image are transmitted through one stream.

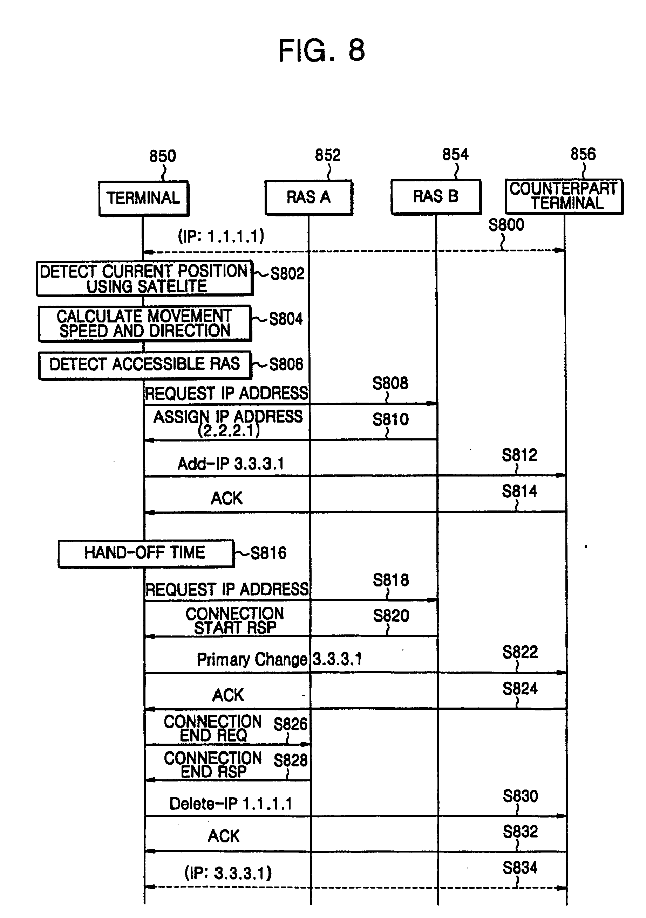

FIG. 8 is a ladder diagram of a terminal hand-off according to another exemplary embodiment of the present invention.

In FIG. 8, a terminal 850 performing hand-off has the same construction as the terminal 830 of FIG. 7.

In other words, the hand-off of the terminal 850 of FIG. 8 is the same as that of the terminal 830 of FIG. 7.

As shown in FIG. 8, the terminal 850 is in communication with a counterpart terminal 856 through an RAS A 852 (S800).

The terminal 850 is assigned an IP address of "1.1.1.1" from the RAS A 852.

The terminal 850 can move in an arbitrary direction or stop at a certain position while communicating with the counterpart terminal 856 through the RAS A 852.

The terminal 850 calculates distances between at least three satellites every set period in order to detect its position while moving or stopping, and detects its position from the respective calculated distances (S802).

The terminal 850 then calculates a movement speed based on a movement distance for a set time and a movement time, and predicts its movement direction using its position detected every set period and previous position (S804).

The terminal 850 detects the RASs that can be assigned new IP addresses in advance, using the position information provided from the RASs whose movement directions are predicted (S806).

The detecting of the RAS that can be assigned the new IP address can be performed depending on whether or not the terminal 850 enters service areas of the RASs that can be assigned the new IP addresses.

The terminal 850 is assumed to enter a service area of an RAS B 854.

The terminal 850 requests the RAS B 854 to assign the IP address (S808).

Upon receipt of the IP address assignment request from the terminal 850, the RAS B 854 assigns the IP address of "3.3.3.1," and transmits the assigned IP address to the terminal 850 (S810).

Upon assignment of the new IP address of "3.3.3.1" from the RAS B 854, the terminal 850 provides the new assigned IP address of "3.3.3.1" to the address addition (Add-IP) message using the multi-homing of the mSCTP, and transmits the address addition message to the counterpart terminal 856 (S812).

The counterpart terminal 856 adds the IP address of "3.3.3.1" provided to the address addition message received from the terminal 850, to the address list used for communication with the terminal 850, and generates and transmits an address addition response message to the terminal 850 (S814).

When there is data to be transmitted to the terminal 850, the counterpart terminal 856 transmits the data to the IP address of "1.1.1.1" used for communication before the new IP address is added to the terminal 850.

When an intensity of a signal received from the RAS A 852 is less than a predetermined intensity, the terminal 850 then checks whether or not an intensity of a signal received from the RAS B 854 is more than a predetermined intensity (S816).

The terminal 850 generates and transmits a connection start request (REQ) message to the RAS B 854 when the intensity of the signal received from the RAS B 854 is more than a predetermined intensity and the intensity of the signal received from the RAS A 852 is less than a predetermined intensity (S818).

Upon receipt of the connection start request message from the terminal 850, the RAS B 854 generates and transmits a connection start response (RSP) message to the terminal 850 (S820).

The terminal 850 the generates an address change (Primary change) message to change the IP address of "3.3.3.1" assigned from the RAS B 854 into an address for communication, and transmits the generated change message to the counterpart terminal 856 (S822).

Preferably, the address change message is transmitted from the terminal 850 to the counterpart terminal 856 through the RAS B 854.

Accordingly, the counterpart terminal 856 changes the address used for communication with the terminal 850 from the IP address of "1.1.1.1" assigned from the RAS A 852 before hand-off to the IP address of "3.3.3.1" assigned from the RAS B 656 to be hand-off, and generates and transmits an address change response message to the terminal 850 (S824).

Upon receipt of the address change response message from the counterpart terminal 856, the terminal 850 generates and transmits the connection end request (REQ) message to the RAS A 852 before hand-off (S826).

Upon receipt of the connection end request message from the terminal 850, the RAS A 852 ends connection with the terminal 850, and generates and transmits a connection end response (RSP) message to the terminal 850 (S828).

Upon receipt of the connection end response message from the RAS A 852, the terminal 850 generates an address deletion (Delete-IP) message to delete the IP address of "1.1.1.1" assigned from the RAS A 852 using the multi-homing of the mSCTP, and transmits the address deletion message to the counterpart terminal 856 through the RAS B 854 (S830).

Upon receipt of the address deletion message from the terminal 850, the counterpart terminal 856 deletes the IP address of "1.1.1.1" assigned from the RAS A 852, from the address list that is used for communication with the terminal 850, and generates and transmits an address deletion response message to the terminal 850 (S832).

The terminal 850 then performs communication with the counterpart terminal 850 through the IP address of "3.3.3.1" assigned from the RAS B 854 (S834).

As described above, with the wireless broadband Internet system and the terminal hand-off method in the system according to the present invention, the movement direction can be predicted, and the IP address can be assigned from the radio access stations located near the predicted direction, thereby preventing data loss upon hand-off.

Furthermore, with the wireless broadband Internet system and the terminal hand-off method in the system according to the present invention, at least one piece of data can be received from the counterpart terminal through the different stream generated on the QoS-by-QoS basis using the multi streaming of the mSCTP. Accordingly, the bottleneck of the low-priority stream cannot be allowed to have influence on the high-priority stream.

While the present invention has been described with reference to exemplary embodiments thereof, it will be understood by those skilled in the art that various modifications in form and detail can be made therein without departing from the scope of the present invention as defined by the following claims.

## Claims

1. A terminal hand-off apparatus in a wireless broadband Internet system, the apparatus comprising:
a connection processor adapted to predict a movement direction of the terminal that is in communication with the counterpart terminal using a current position of the terminal that is in communication with the counterpart terminal using a predetermined Internet Protocol (IP) address, and to request an IP address to be assigned upon entering a coverage area of at least one of a plurality of Radio Access Stations (RASs) located near the predicted movement direction; and
a hand-off processor adapted to transmit at least one IP address assigned by the RAS whose coverage area is entered to the counterpart terminal, and to request the counterpart terminal to transmit data to the IP address assigned by the RAS upon hand-off to one of the plurality of RASs assigning the at least one IP address.

2. The apparatus of claim 1, wherein the connection processor is adapted to either detect the current position of the terminal from position information provided from at least three RASs located near the terminal, using a triangulation method, or to detect the current position of the terminal using signals received from at least three satellites.

3. The apparatus of claim 1, wherein the connection processor is adapted to predict the movement direction of the terminal using the current position of the terminal and previous positions of the terminal for a set time.

4. The apparatus of claim 1, wherein the connection processor is assigned at least one IP address from the RAS whose coverage area has been entered, using multi-homing of a mobile Stream Control Transport Protocol (mSCTP), and maintains connection with the plurality of RASs.

5. The apparatus of claim 1, wherein the hand-off processor is adapted to request the counterpart terminal to delete the predetermined IP address as the terminal hands-off to one of the plurality of RASs assigning the at least one IP address.

6. A terminal hand-off method in a wireless broadband Internet system, the method comprising:
predicting a movement direction using a current position of the terminal that is in communication with a counterpart terminal using any Internet Protocol (IP) address;
upon entering a coverage area of at least one of a plurality of Radio Access Stations (RASs) located near the predicted movement direction, requesting an IP address to be assigned, and transmitting at least one IP address assigned from the RAS whose coverage area has been entered to the counterpart terminal; and
when handing-off to one of the plurality of RASs assigning at least one IP address, requesting the counterpart terminal to transmit data to the IP address assigned by the RAS.

7. The method of claim 6, wherein predicting the movement direction using the current position of the terminal comprises either detecting the current position of the terminal from position information provided from at least three RASs located near the terminal using a triangulation method, or detecting the current position of the terminal using signals received from at least three satellites.

8. The method of claim 6, wherein predicting the movement direction using the current position of the terminal comprises predicting the movement direction of the terminal using the current position of the terminal and previous positions of the terminal for a set time.

9. The method of claim 6, wherein transmitting at least one IP address assigned by the RAS whose coverage area has been entered to the counterpart terminal comprises assigning at least one IP address from the RAS whose coverage area has been entered, using a multi-homing of a mobile Stream Control Transport Protocol (mSCTP), and maintaining connection with the RAS.

10. The method of claim 6, wherein requesting the counterpart terminal to transmit data to the IP address assigned by the RAS comprises requesting the counterpart terminal to delete the predetermined IP address upon hand-off of the terminal to one of the RASs assigning at least one IP address.
